# EUROPÄISCHE PATENTSCHRIFT

(11) **EP 0 776 837 B1**
(45) Veröffentlichungstag und Bekanntmachung des Hinweises auf die Patenterteilung: **06.11.2002**
(21) Anmeldenummer: 96112988.9
(22) Anmeldetag: 13.08.1996
(51) Int. Cl.: B65G 23/06, B65G 23/12

(54) **Riemenantrieb, insbesondere für einen endlosen Transportgurt eines Fördersystems**
Belt drive particularly for an endless conveyor belt of a conveying system
Transmission à courroie, en particulier pour une bande transporteuse d'un système de transport

(30) Priorität: 30.11.1995 DE 19544572
(43) Veröffentlichungstag der Anmeldung: 04.06.1997
(73) Patentinhaber: ROBERT BOSCH GMBH, 70442 Stuttgart (DE)
(72) Erfinder: Sauer, Christian, 73650 Winterbach (DE); Bares, Jan, 71394 Kernen (DE); Nickel, Maritta, 71522 Backnang (DE)
(74) Vertreter: Thürer, Andreas

(56) Entgegenhaltungen:
- EP-A- 0 367 118
- DE-A- 2 730 109
- DE-A- 2 740 807
- GB-A- 338 289
- US-A- 4 492 304
- PATENT ABSTRACTS OF JAPAN vol. 008, no. 197 (M-324), 11.September 1984 & JP 59 086502 A (MASAHIRO UEDA), 18.Mai 1984,

## Beschreibung

### Stand der Technik

Die Erfindung betrifft einen Riemenantrieb, insbesondere für einen endlosen Transportgurt eines Fördersystems nach der Gattung des Hauptanspruchs.

Bei den bekannten Doppelgurtfördersystemen besteht zumindest einer der Transportgurte aus einem endlosen Zahnriemen, der an den beiden Enden der Förderstrecke umgelenkt und unter der Transportebene zurückgeführt wird. Der Transportgurt wird über Umlenkrollen geführt und von einer mit einer Verzahnung versehenen Antriebsrolle angetrieben. Zum Erreichen einer bestimmten Übertragungsleistung benötigt der Transportgurt des Zahnriementriebs eine Vorspannung, die gewährleistet, daß das Zahnprofil in die Verzahnung der Antriebsrolle eingreift. Sollen bei Förderstrecken von Fördersystemen die Transportgurte ohne eine zusätzliche Spannrolle angetrieben werden, ist es notwendig, den Transportgurt in vorgespanntem Zustand einzusetzen. Wegen der relativ großen Länge von Transportstrecken von Fördersystemen und der nicht immer präzisen Ablängung der Transportstrecken-Trägerprofile reicht die Vorspannung des Transportgurtes in der Regel nicht aus, um ein wirksames Eingreifen des Zahnprofils des Transportgurts in die Verzahnung der Antriebsrolle zum Erreichen einer bestimmten Übertragungsleistung sicherzustellen.

Aus der US 4,492,304 ist ein Gleitschuh für eine Förderkette bekannt. Der Gleitschuh wird mit Druckfedern, die mittels Stiften geführt sind, beaufschlagt.

In der DE 27 30 109 A1 ist ein Riemenantrieb offenbart, bei dem der Riemen über zwei exzentrisch gelagerte Andrückrollen gegen eine Umlenkrolle gedrückt wird.

Andrückrollen und Gleitschuhe bei Riemenantrieben für Zahnriemen sind auch aus der EP 0 367 118 A1 bekannt.

Aus der DE 27 40 807 A1 geht eine spindelartig gelagerte Umlenkrolle hervor, mit der ein Zahnriemen gespannt wird.

Aus der GB 338 289 schließlich ist ein Fördersystem bekannt, bei dem federbeaufschlagte Rollen zum Spannen von Fördergurten verwendet werden.

### Vorteile der Erfindung

Der erfindungsgemäße Riemenantrieb mit den kennzeichnenden Merkmalen des Anspruchs 1 hat den Vorteil, daß ohne die Verwendung einer Spannrolle auf einfache Weise ein Eingreifen des Profils des Transportgurts in das zahnförmige Umfangsprofil der Antriebsrolle gewährleistet wird, indem als Druckelement ein Federelement verwendet wird. Dadurch sind auch bei längeren Transportgurten hohe Übertragungsleistungen möglich.

Durch die in den Unteransprüchen aufgeführten Maßnahmen sind vorteilhafte Weiterbildungen des Riemenantriebs möglich. Besonders vorteilhaft ist es, wenn das Federelement am Einlauf und am Auslauf des Transportgurts mit einer radialen Kraft auf den Transportgurt drückt. Dadurch wird der Transportgurt über den gesamten Umschlingungswinkel im Umfangsprofil der Antriebsrolle geführt. Zur Unterstützung der Federkraft sind zusätzliche Stützelemente vorgesehen, gegen die die federnden Schenkel des Federelements anschlagen, wenn die Federkraft des Federelements überschritten wird.

### Zeichnung

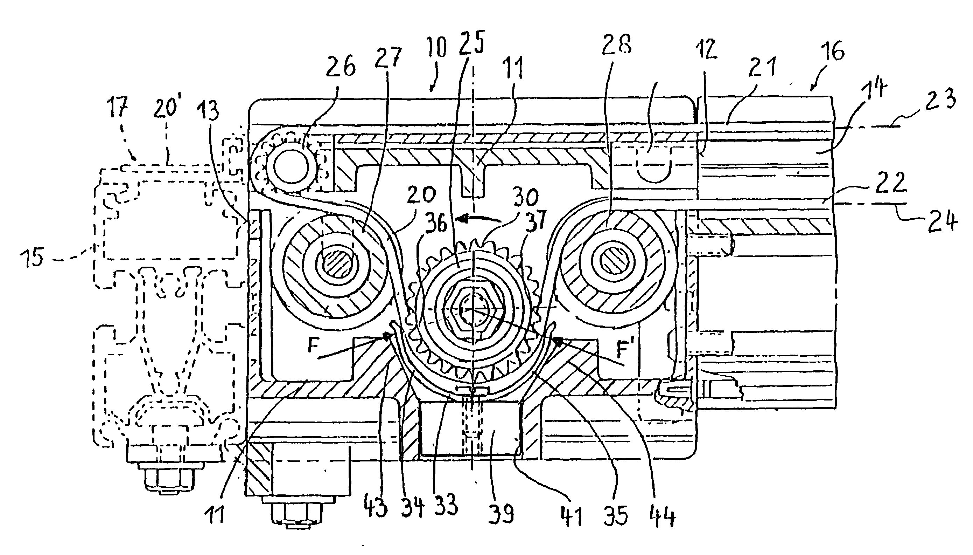

Die Erfindung soll nachfolgend anhand eines in der Zeichnung dargestellten Ausführungsbeispiels näher erläutert werden. Die einzige Figur zeigt eine Schnittdarstellung durch eine Antriebseinheit für eine Förderstrecke eines Doppelgurtfördersystems.

### Ausführungsbeispiel

Eine Antriebseinheit 10 hat ein Gehäuse 11 mit einer ersten Montagefläche 12 und einer zweiten Montagefläche 13. An die erste Montagefläche 12 ist ein erstes Trägerprofil 14 und an die zweite Montagefläche 13 ein zweites Trägerprofil 15 befestigt. Das erste Trägerprofil 14 bildet zusammen mit der Antriebseinheit 10 und einer am anderen Ende ebenfalls angeordneten, nicht dargestellten Antriebs- oder Umlenkeinheit eine erste Förderstrecke 16. Das zweite Trägerprofil 15 bildet mit ebenfalls an den beiden Enden angeordneten, nicht dargestellten Antriebs- oder Umlenkeinheiten eine zweite Förderstrecke 17.

Die erste Förderstrecke 16 besitzt einen Transportgurt 20 mit einem Zugtrum 21 und einem Leertrum 22. Der Transportgurt 20 ist endlos und hat ein nicht näher dargestelltes Zahnprofil eines Zahnriemens. Die zweite Förderstrecke 17 verfügt über einen weiteren Transportgurt 20'. Die Transportgurte 20 und 20' gehören im vorliegenden Ausführungsbeispiel zu einem nicht näher dargestellten Doppelgurtfördersystem.

Im Gehäuse 11 der Antriebseinheit 10 ist eine Antriebsrolle 25, eine erste Umlenkrolle 26, eine zweite Umlenkrolle 27 und eine dritte Umlenkrolle 28 gelagert. Der Transportgurt 20 ist mit dem Zugtrum 21 in einer Transportebene 23 geführt und wird von dort über die erste Umlenkrolle 26 zur zweiten Umlenkrolle 27 sowie von der zweiten Umlenkrolle 27 zur Antriebsrolle 25 umgelenkt. Von der Antriebsrolle 25 wird der Transportgurt 20 zur dritten Umlenkrolle 28 geführt, von welcher der Transportgurt 20 mit dem Leertrum 22 in eine Rückführebene 24 umgelenkt wird.

Die Antriebsrolle 25 besitzt eine entsprechende Verzahnung 30 für das Zahnprofil des Transportgurts 20. Die am Ende der Förderstrecke 16 angeordnete erste Umlenkrolle 26 hat beispielsweise ebenfalls eine Verzahnung, für das Zahnprofil des Transportgurts 20. Die Achsen der Umlenkrollen 27, 28 liegen beispielsweise in einer gemeinsamen horizontalen Ebene und sind bezüglich einer durch die Drehachse der Antriebsrolle 25 vertikal verlaufenden Ebene symmetrisch angeordnet. Über die Umlenkrollen 27, 28 wird die Rückseite des Transportgurts 20 geführt, die kein Zahnprofil aufweist.

Im Gehäuse 11 ist ferner beispielsweise ein halbkreisförmiges Federelement 33 mit einem einlaufseitigen federnden Schenkel 34 und einem auslaufseitigen federnden Schenkel 35 angeordnet. Die Begriffe einlaufseitig und auslaufseitig beziehen sich auf einen Einlauf 36 und einen Auslauf 37 des Transportgurts 20 an der Umlenkrolle 25. Am Einlauf 36 greift der Transportgurt 20 in die Verzahnung 30 der Antriebsrolle 25 ein. Am Auslauf 37 läuft das Zahnprofil des Transportgurtes 20 aus der Verzahnung 30 der Antriebsrolle 25 heraus. Gehalten wird das Federelement 33 im Gehäuse 11 mittels eines klotzförmigen Halteteils 39, welches in einer im Gehäuse 11 eingebrachten Aussparung 41 fixiert ist.

Die federnden Schenkel 34, 35 des Federelements 33 sind dabei derart geformt und vorgespannt, daß am Einlauf 36 der einlaufseitige federnde Schenkel 34 mit einer radialen Kraft F und am Auslauf 37 der auslaufseitige federnde Schenkel 35 mit einer radialen Kraft F' mit beispielsweise einer linienförmige Berührung gegen die Rückseite des Transportgurts 20 drückt, so daß am Einlauf 36 das Zahnprofil des Transportgurts 20 in die Verzahnung 30 der Antriebsrolle 25 gedrückt und bis zum Auslauf 37 in der Verzahnung 30 der Antriebsrolle 25 gehalten wird.

Zur Unterstützung der radialen Kraft F, F' des Federelememts 33 ist für den einlaufseitigen federnden Schenkel 34 ein einlaufseitiges Stützelement 43 und für den auslaufseitigen federnden Schenkel 35 ein auslaufseitiges Stützelement 44 vorgesehen. Die Stützelemente 44,45 sind im vorliegenden Ausführungsbeispiel als Anformungen im Gehäuse 11 integriert. Es ist aber auch denkbar, die Stützelemente 44, 45 als separate Stützen im Gehäuse 11 zu befestigen oder mit dem Halteteil 39 als ein Teil auszuführen. Die federnden Schenkel 34, 35 des Federelements 33 sind so ausgebildet, daß sie am jeweiligen Stützelement 44, 45 anschlagen, wenn die Federkraft der federnden Schenkel 34, 35 überschritten wird. Je nach dem, mit welchem Bereich die federnden Schenkel 34, 35 gegen die Stützelemente 43, 44 anschlagen, wird entweder die radiale Kraft F, F' verstärkt oder die Schenkel 34, 35 werden zu festen Anschlägen in Richtung der Kraft F oder F' für den Transportgurt 20.

Als zweckmäßig hat sich herausgestellt, daß die federnden Schenkel 34, 35 bei normaler Übertragungsleistung nicht an den jeweiligen Stützelementen 44, 45 anschlagen, sondern, daß zwischen den Stützelementen 43, 44 und den federnden Schenkeln 34, 35 jeweils ein Abstand von beispielsweise 0,2 bis 0,5 mm vorhanden ist. Dadurch wird gewährleistet, daß die federnden Schenkel 33, 35 im Normalbetrieb nur mittels der radialen wirkenden Kraft F, F' gegen den Transportgurt 20 drücken. Wird der Transportgurt 20 mit einer großen Übertragungsleistung belastet und klettern die Zähne des Transportgurts auf der Verzahnung 30 der Antriebsrolle 25 auf, werden die federnden Schenkel 33, 34 derart ausgelenkt, daß sie am jeweiligen Stützelement 43, 44 anschlagen. Dadurch wird gewährleistet, daß das Zahnprofil des Transportgurts 20 auch bei einer höheren Übertragungsleistung nicht über die Verzahnung 30 der Antriebsrolle 25 springt.

Die federnden Schenkel 34, 35 des Federelements 33 erfüllt die gleiche Funktion in der entgegengesetzten Zahnriemenlaufrichtung.

Neben der beschriebenen Ausführungsform für das Federelement 33 sind jedoch noch andere Ausführungsformen denkbar. Wesentlich ist jedoch, daß auf den Transportgurt 20 zumindest am Einlauf 36 eine Kraft einwirkt, die das Zahnprofil des Transportgurtes 20 in die Verzahnung 30 der Antriebsrolle 25 drückt.

## Patentansprüche

1. Riemenantrieb, insbesondere für einen endlosen Transportgurt eines Fördersystems, mit einem Gehäuse, in dem eine Antriebsrolle mit einem zahnförmigen Umfangsprofil und mindestens eine Umlenkrolle für den Transportgurt gelagert sind, wobei der Transportgurt ein Profil aufweist, das in das zahnförmige Umfangsprofil der Antriebsrolle einzugreifen vermag, **dadurch gekennzeichnet, daß** im Gehäuse (11) mindestens ein Druckelement angeordnet ist, welches zumindest am Beginn des Eingreifens des Profils des Transportgurts (20) in das Umfangsprofil (30) der Antriebsrolle (25) mit einer im wesentlichen radial wirkenden Kraft (F) auf den Transportgurt (20) einwirkt, wobei das Druckelement ein Federelement (33) ist.

2. Riemenantrieb nach Anspruch 1, **dadurch gekennzeichnet, daß** das Federelement (33) mit einem einlaufseitigen federnden Schenkel (34) und einem auslaufseitigen federnden Schenkel (35) ausgebildet ist und daß die federnden Schenkel (34, 35) derart geformt und vorgespannt sind, daß der einlaufseitige federnde Schenkel (34) das Profil des Transportgurts (20) am Einlauf (36) und der auslaufseitige federnde Schenkel (35) das Profil des Transportgurts (20) am Auslauf (37) in das Umfangsprofil (30) der Antriebsrolle (25) drückt.

3. Riemenantrieb nach Anspruch 2, **dadurch gekennzeichnet, daß** der einlaufseitige federnde Schenkel (34) und der auslaufseitige federnde Schenkel (35) symmetrisch in bezug zu einer durch die Drehachse der Antriebsrolle (25) verlaufende Symmetrieebene ausgebildet sind.

4. Riemenantrieb nach Anspruch 2, **dadurch gekennzeichnet, daß** zumindest für den einlaufseitigen federnden Schenkel (34) ein einlaufseitiges Stützelement (43) vorgesehen ist, gegen welches der einlaufseitige federnde Schenkel (34) anschlägt, wenn die Federkraft des federnden Schenkels (34) überschritten wird.

5. Riemenantrieb nach Anspruch 4, **dadurch gekennzeichnet, daß** zwischen dem Stützelement (43, 44) und dem federnden Schenkel (34, 35) ein Abstand von 0,2 bis 0,5 mm ausgebildet ist.

6. Riemenantrieb nach Anspruch 5, **dadurch gekennzeichnet, daß** das Stützelement (44, 45) eine im Gehäuse (11) ausgebildete Anformung ist.

## Claims

1. A belt drive, primarily for an endless transport belt of a conveyer system, comprising a housing in which a driving roller with a tooth-shaped circumferential profile and at least one deflection roller for the transport belt are run on bearings, the transport belt having a profile capable of engaging into the tooth-shaped circumferential profile of the driving roller, **characterized in that** in the housing (11), there is arranged at least one pressure element, which - at least at the start of the engagement of the profile of the transport belt (20) into the circumferential profile (30) of the driving roller (25) - acts upon the transport belt (20) with an essentially radial power (F), such pressure element being a spring element (33).

2. A belt drive according to Claim 1, **characterized in that** the spring element (33) is designed with a spring-mounted leg at the inflow side (34) and a spring-mounted leg at the discharge side (35), and that the spring-mounted legs (34, 35) are shaped and prestressed in such a way that the spring-mounted leg at the inflow side (34) presses the profile of the transport belt (20) into the circumferential profile (30) of the driving roller (25) at the inflow (36), and that the spring-mounted leg at the discharge side (35) presses the profile of the transport belt (20) into the circumferential profile (30) of the driving roller (25) at the discharge (37).

3. A belt drive according to Claim 2, **characterized in that** the spring-mounted leg at the inflow side (34) and the spring-mounted leg at the discharge side (35) are symmetrical in respect of the plane of symmetry running through the rotation axis of the driving roller (25).

4. A belt drive according to Claim 2, **characterized in that** at least for the spring-mounted leg at the inflow side (34), a support element at the inflow side (43) is provided, against which the spring-mounted leg at the inflow side (34) stops if the spring resistance of the spring-mounted leg (34) is exceeded.

5. A belt drive according to Claim 4, **characterized in that** a space ranging from 0.2 to 0.5 mm is provided between the support element (43, 44) and the spring-mounted leg (34, 35).

6. A belt drive according to Claim 5, **characterized in that** the support element (43, 44) is a protrusion in the housing (11).

## Revendications

1. Entraînement à courroie, approprié en particulier pour une courroie de transport sans fin dans un système convoyeur, avec enveloppe où se trouvent logées une poulie d'entraînement présentant un profil périphérique denté et au moins une poulie de renvoi, la courroie de transport présentant pour sa part un profil conçu de façon à ce qu'un engrenage dans le profil périphérique denté de la poulie d'entraînement soit possible, **caractérisé par** la mise en oeuvre dans l'enveloppe (11) d'au moins un élément de pression représenté par un élément ressort (33) qui, au moins au moment de l'engagement du profil de la courroie de transport (20) dans le profil périphérique (30) de la poulie d'entraînement (25), exerce une force (F) agissant principalement radialement sur la courroie de transport (20).

2. Entraînement à courroie suivant revendication 1, **caractérisé par le fait que** l'élément ressort (33) est conçu avec une branche à ressort côté entrée (34) et une branche à ressort côté sortie (35) et **par le fait que** ces branches à ressort (34, 35) sont façonnées et préchargées de façon telle que la branche à ressort côté entrée(34) pousse le profil de la courroie de transport (20) à l'entrée (36) tandis que la branche à ressort côté sortie (35) pousse le profil de la courroie de transport (20) à la sortie dans le profil périphérique (30) de la poulie d'entraînement (25).

3. Entraînement à courroie suivant revendication 2, **caractérisé par le fait que** la branche à ressort côté entrée (34) et la branche à ressort côté sortie (35) sont conçues symétriquement par rapport à un plan de symétrie cheminant à travers l'axe de rotation de la poulie d'entraînement (25).

4. Entraînement à courroie suivant revendication 2, **caractérisé par** la prévision, au moins pour la branche à ressort côté entrée (34), d'un élément d'appui (43) contre lequel la branche à ressort côté entrée (34) vient buter lorsque la force élastique de la branche à ressort (34) est dépassée.

5. Entraînement à courroie suivant revendication 4, **caractérisé par** l'aménagement d'un espace de 0,2 à 0,5 mm entre l'élément d'appui (43, 44) et la branche à ressort (34, 35).

6. Entraînement à courroie suivant revendication 5, **caractérisé par le fait que** l'élément d'appui (43, 44) est représenté par un usinage apporté dans l'enveloppe (11).
